# EUROPÄISCHE PATENTSCHRIFT

(11) **EP 2 237 404 B1**
(45) Veröffentlichungstag und Bekanntmachung des Hinweises auf die Patenterteilung: **24.05.2017**
(21) Anmeldenummer: 09010097.5
(22) Anmeldetag: 05.08.2009
(51) Int. Cl.: H02M 7/797, H02M 1/44, H02M 7/5388

(54) **WECHSELRICHTER MIT ZWEI ASYMMETRISCHEN BRÜCKENSCHALTUNGEN UND EINEM FREILAUFPFAD ZUR ENTKOPPLUNG VON GLEICH- UND WECHSELSPANNUNGSSEITE**
INVERTER WITH TWO ASYMMETRIC BRIDGES AND A FREE-WHEELING PATH DECOUPLING THE DC INPUT FROM THE AC OUTPUT
ONDULEUR AVEC DEUX PONTS ASYMMETRICS ET UNE BRANCHE À ROUE LIBRE DÉCOUPLANTE L'ENTRÉE DU COURANT CONTINU DE LA SORTIE DU COURANT ALTERNATIF

(30) Priorität: 30.03.2009 EP 09004544
(43) Veröffentlichungstag der Anmeldung: 06.10.2010
(73) Patentinhaber: SMA Solar Technology AG, 34266 Niestetal (DE)
(72) Erfinder: Müller, Burkard, 34123 Kassel (DE)
(74) Vertreter: Lahnor, Peter

(56) Entgegenhaltungen:
- EP-A- 1 369 985
- DE-A1- 4 017 207
- DE-B3-102004 030 912
- US-B2- 6 847 196
- SALMON J ET AL: "PWM Inverters Using Split-Wound Coupled Inductors" INDUSTRY APPLICATIONS SOCIETY ANNUAL MEETING, 2008. IAS '08. IEEE, IEEE, PISCATAWAY, NJ, USA, 5. Oktober 2008 (2008-10-05), Seiten 1-8, XP031354023 ISBN: 978-1-4244-2278-4

## Beschreibung

Die Erfindung betrifft einen bidirektionalen Wechselrichter nach Anspruch 1, insbesondere zur Verwendung in einer Photovoltaikanlage.

Bekannt sind bidirektionale Wechselrichter. Für bestimmte Aufgaben müssen diese Wechselrichter in der Lage sein, Energie sowohl von der Gleichspannungs- auf die Wechselspannungsseite als auch von der Wechselspannungs- auf die Gleichspannungsseite zu übertragen. Ein Beispiel für diese Anforderung ist die Bereitstellung von Blindleistung auf der Wechselspannungsseite des Wechselrichters. In diesem Fall muss der Wechselrichter nur während eines Teils der Netzperiode Energie von der Gleichspannungs- auf die Wechselspannungsseite übertragen, während sich in der restlichen Zeit der Energiefluss umkehrt.

Für Wechselrichter, die als Halbleiterschalter sogenannte IGBTs benutzen, stellt diese Anforderung im Allgemeinen kein Problem dar, wenn jedem IGBT eine Diode antiparallel geschaltet wird. Dreht sich der Energiefluss um, so wird die Diode statt des IGBT bestromt. Sollen andere Halbleiterschalter -wie z. B. MOSFET mit internen, parasitären Dioden- eingesetzt werden, ergeben sich häufig Probleme mit den internen, parasitären Dioden dieser Bauteile. Diese Dioden sind üblicherweise für schaltenden Betrieb nur sehr schlecht geeignet, da sie hohe Sperrverzugsladungen und einen harten Stromabriss beim Abkommutieren aufweisen. Es lässt sich jedoch nicht vermeiden, dass diese Dioden bei Umkehr des Energieflusses den Strom genauso übernehmen wie die gezielt antiparallel zu den IGBTs eingebauten Dioden. Die internen, parasitären Dioden verursachen dann durch ihre Sperrverzugsladungen hohe Schaltverluste und durch den harten Stromabriss ein schlechtes elektromagnetisches Verhalten. Es müssen deshalb spezielle Schaltungsanordnungen benutzt werden, wenn mit MOSFET oder vergleichbaren Halbleitern bidirektionale Wechselrichter aufgebaut werden sollen.

Eine solche Schaltung ist aus der US 6 847 196 B2 bekannt. Hier wird ein DC/AC-Wandler mit vier Schaltern und mit durch zusätzliche sättigbare Drosseln getrennten Strompfaden eingesetzt. Es sind vier zusätzliche Freilaufdioden vorhanden. Diese Anordnung verhindert einen Stromfluss durch die intern in den Schaltern vorhandenen antiparallelen Dioden. Von Nachteil bei dieser Schaltung ist jedoch, dass in keinem Schaltzustand eine Entkopplung zwischen der DC-Quelle und der Schaltungsanordnung stattfindet. Wie bei jeder einfachen H-Brücke tritt deshalb bei einem Schaltvorgang in nur einer Brückenhälfte ein hochfrequenter Spannungssprung zwischen Ein- und Ausgangsseite auf. Ist die Ausgangsseite des Wechselrichters an das öffentliche Netz angeschlossen und damit geerdet, springt das Potenzial der Eingangsseite hochfrequent gegenüber dem Erdpotenzial. Dies ist z. B. für Photovoltaikgeneratoren als Quelle sehr nachteilig, da diese aufgrund ihrer Bauform eine hohe Kapazität gegen das Gehäuse besitzen, so dass unerwünschte kapazitive Ableitströme bzw. gefährliche Berührungsspannungen entstehen können.

Hochfrequente Potenzialsprünge lassen sich bei dieser Schaltung nur vermeiden, wenn beide Brückenhälften gleichzeitig geschaltet werden, wodurch sich jedoch der Wirkungsgrad der Schaltung verringert. Alternativ ließe sich der Schaltung netzseitig ein Transformator nachschalten. Auch hierbei würde jedoch der Gesamtwirkungsgrad sinken. Ein Einsatz dieser Schaltung im Photovoltaikbereich ist daher ungünstig.

Die deutsche Patentschrift DE 10 2004 030 912 B3 beschreibt einen Photovoltaik-Wechselrichter, der aus vier Brückenschaltern und einem zusätzlichen Entkopplungsschalter außerhalb der Brücke bzw. im Gleichspannungskreis besteht. Diese Schaltung löst das Problem der hochfrequenten Ableitströme mit gutem Wirkungsgrad. Während der Freilaufphasen wird ein Freilaufstromkreis durch den Entkopplungsschalter vom Photovoltaik-Generator getrennt. Der Freilaufstrom fließt in einem vom Photovoltaik-Generator entkoppelten Stromkreis. Dadurch wird die Umladung der parasitären Kapazität zwischen Generator und Erde vermieden, so dass hochfrequente Ableitströme weitestgehend nicht auftreten.

Der Nachteil dieser Schaltung liegt darin, dass bei bidirektionalem Betrieb für die Schalter und die Dioden keine optimalen Bauteile eingesetzt werden können. Aufgrund der unterschiedlichen Energieflussrichtungen müssen für alle Halbleiterschalter antiparallele Dioden vorgesehen werden. Werden MOSFET oder vergleichbare Transistoren als Schalter verwendet, übernehmen deren interne, parasitäre Dioden den Strom mit den bereits beschriebenen negativen Auswirkungen.

Eine andere Lösung für das Problem der hochfrequenten Ableitströme beschreibt die EP 1 369 985 A2. Eine übliche H-Brücke mit vier Brückenschaltern wird hier durch zwei schaltbare Verbindungspfade zwischen den Brückenausgängen ergänzt, so dass ebenfalls ein von der Gleichspannungsseite entkoppelbarer, potenzialfreier Freilauf geschaffen wird. Auch hier müssen jedoch zumindest für die Brückenhalbleiter antiparallele Dioden vorgesehen werden, so dass spezielle Halbleiter wie MOSFET nicht ohne Probleme eingesetzt werden können.

Aus der Veröffentlichung SALMON J ET AL: "PWM Inverters Using Split-Wound Coupled Inductors" INDUSTRIE APPLICATIONS SOCIETY ANNUAL MEETING, 2008. IAS'08, IEEE, PISCATAWAY, NJ, USA, 5.Oktober 2008, Seiten 1-8, XP031354023 ISBN:978-1-4244-2278-4 ist eine Wechselrichterschaltung mit zwei gekoppelten Brückenschaltungen bekannt. Vorgeschlagen wird der Einsatz von zwei Vollbrückenschaltungen, die ausgangsseitig in Serie geschaltet sind, wobei getrennte Gleichspannungsversorgungen eingesetzt werden. Eine andere Schaltung aus dieser Veröffentlichung nutzt eine wechselspannungsseitige Parallelschaltung.

Der Erfindung liegt die Aufgabe zugrunde, mit geringem Schaltungsaufwand eine transformatorlose Wechselrichterschaltung, insbesondere für Photovoltaikanlagen, bereitzustellen, die einerseits hochfrequente Spannungssprünge zwischen Gleich- und Wechselspannungsseite weitestgehend vermeidet, dabei einen hohen Wirkungsgrad besitzt, und andererseits bidirektional betrieben werden kann, so dass sie blindleistungsfähig ist.

Diese Aufgabe wird durch einen Wechselrichter mit den Merkmalen des Anspruches 1 in Verbindung mit seinen Oberbegriffsmerkmalen gelöst.

Der Erfindung liegt die Erkenntnis zugrunde, dass bei üblichen Vollbrückentopologien entweder kein potenzialfreier Freilauf schaltbar ist, wodurch der Wirkungsgrad der Schaltung gering bleibt, oder aber im Blindleistungsbetrieb ein Strom durch die antiparallelen Dioden der Schalter und somit auch durch eventuell vorhandene Bodydioden fließt. Die Schaltparameter der Bodydioden sind nicht optimal für diese Anwendung. Die Bodydioden besitzen eine hohe Sperrverzugsladung (Qrr), was im Blindleistungsbetrieb zu einem schlechteren Wirkungsgrad der Gesamtanordnung führt, sowie einen harten Stromabriss, der das EMV-Verhalten der Schaltung verschlechtert.

Durch die erfindungsgemäße Wechselrichterschaltung ist es möglich, den Wechselrichter bidirektional zu betreiben, dabei hochfrequente Spannungssprünge zwischen Gleich- und Wechselspannungsseite zu vermeiden und trotzdem Stromflüsse in internen antiparallelen Bodydioden von Halbleiterschaltern zu verhindern, falls solche eingesetzt werden.

Die Erfindung beruht auf dem Gedanken, eine Schaltungsanordnung mit potenzialfreiem Freilauf zu schaffen, die einen Stromfluss zur Rückspeisung zulässt, aber diesen von den internen Bodydioden fernhält.

Erfindungsgemäß werden dazu zwei miteinander verbundene Vollbrücken benutzt, die durch ihren Aufbau wechselspannungsseitig jeweils nur eine Stromrichtung zulassen und die jeweils einen schaltbaren und von der Gleichspannungsseite entkoppelbaren Freilaufpfad besitzen, der ebenfalls nur diese Stromrichtung zulässt. Die Gleichspannungsseiten dieser Vollbrücken werden verbunden und bilden die Gleichspannungsseite des Wechselrichters, während jeder der Wechselspannungsanschlüsse über jeweils eine erfindungsgemäße Brückeninduktivität so mit einem Wechselspannungsanschluss des Wechselrichters verbunden ist, dass jede der beiden für den Betrieb des Wechselrichters wechselspannungsseitig benötigten Stromrichtungen von einer der beiden Vollbrücken getrieben werden kann.

Jede der Vollbrückenschaltungen treibt wechselspannungsseitig einen Strom, der über den Leckstrom der Halbleiter hinausgeht, nur in eine solche Richtung, dass dieser aus den ersten Wechselspannungsanschlüssen hinaus fließt und durch die zweiten Wechselspannungsanschlüsse wieder hinein fließt. Der Leckstrom soll dabei beispielsweise einige Milliampere nicht übersteigen, während jede der Vollbrückenschaltungen einen Strom von mehreren Ampere treiben kann. Durch den entkoppelbaren Freilaufpfad kann der Wechselrichter mit hohem Wirkungsgrad betrieben werden.

Ein oberer Schalter dient als gemeinsamer Schalter für beide Brückenschaltungen. Jede der Brückenschaltungen weist einen eigenen unteren Schalter auf. Durch die doppelte Nutzung des oberen Schalters wird der Schaltungsaufwand reduziert.

Alternativ kann auch ein gemeinsamer unterer Schalter verwendet werden, dann weist jede der Brückenschaltungen getrennte obere Schalter auf.

Die beiden Vollbrücken werden durch das Einfügen der erfindungsgemäßen Brückeninduktivitäten nach Stromrichtungen getrennt, so dass sich der Strom in einem einzelnen Halbleiter auch dann nicht umkehren kann, wenn dieser eine interne, parasitäre Diode besitzt. Dieses Prinzip wird auch durch die schaltbaren Freilaufpfade nicht verletzt, da diese erfindungsgemäß nur eine Stromrichtung zulassen. Trotzdem bieten die schaltbaren Freilaufpfade die aus der DE 10 2004 030 912 B3 und der EP 1 369 985 A2 bekannten Vorteile, indem sie einen hohen Wirkungsgrad ermöglichen, ohne dass hochfrequente Spannungssprünge zwischen Gleich- und Wechselspannungsseite auftreten.

Jede Brückenschaltung kann einen Freilaufpfad umfassen, der aus einem dritten Schalter und einer dritten Diode besteht, wobei der dritte Schalter in Reihe zwischen dem ersten Schalter und der zweiten Diode geschaltet sein kann und die dritte Diode in Reihe zwischen der ersten Diode D1, D1' geschaltet sein kann. Dadurch wird ein potenzialfreier, schaltbarer Freilauf geschaffen.

Zwischen dem Verbindungspunkt zweier Brückendrosseln und dem Wechselspannungsausgang können weitere Filterelemente vorhanden sein, beispielsweise mindestens eine Filterdrossel, die einen größeren, insbesondere einen mindestens fünfmal größeren Induktivitätswert als die Brückendrossel aufweist. Dadurch kann die eigentliche Filterfunktion von der Filterdrossel übernommen werden, so dass nur ein großes magnetisches Bauteil pro Pol der Netzspannung benötigt wird.

Jede Brückeninduktivität kann durch ein zusätzliches Drossel-Bauelement gebildet sein. Besonders vorteilhaft ist es aber, wenn die beiden Filterdrosseln jeweils als Doppeldrossel ausgeführt sind, wobei die Streuinduktivitäten die vier Brückendrosseln bilden. So lässt sich eine Trennung der Strompfade mit nur zwei Bauelementen erreichen.

Weitere vorteilhafte Ausgestaltungen der Erfindung sind in den Unteransprüchen gekennzeichnet.

Die Erfindung wird beispielhaft anhand der Zeichnungen beschrieben. Es zeigen:
- Fig. 1: einen bidirektionalen Wechselrichter mit zusätzlichen Filterdrosseln,
- Fig. 2: einen Wechselrichter mit Doppeldrosseln als Filterinduktivitäten,
- Fig. 3: eine erste Brückenschaltung,
- Fig. 4: eine zweite Brückenschaltung und
- Fig. 5: eine Schaltungsanordnung des bidirektionalen Wechselrichter.

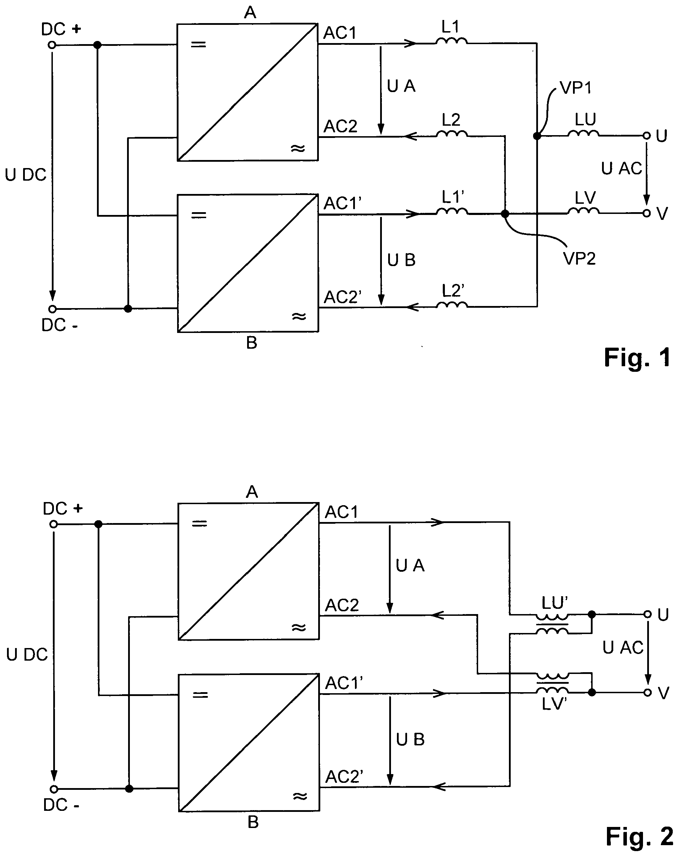

Fig. 1 zeigt das Grundprinzip des erfindungsgemäßen bidirektionalen Wechselrichters, insbesondere eines Photovoltaikwechselrichters. Es werden zwei Vollbrückenschaltungen A, B mit gleichspannungsseitigen Anschlüssen DC+ und DC- sowie wechselspannungsseitigen Anschlüssen bzw. Wechselspannungsanschlüssen AC1, AC2 bzw. AC1', AC2' eingesetzt.

Der Betrag der Wechselspannung U AC ist, wie für Vollbrücken üblich, stets kleiner als die Gleichspannung U DC. Jede der beiden Vollbrückenschaltungen A, B treibt einen Strom aus dem Anschluss AC1 bzw. AC1' und in den Anschluss AC2 bzw. AC2'.

Solange der Strom in diese Richtung fließt, kann die Brückenschaltung A die Ausgangsspannungen U A = U DC, U A = -U DC und U A=0 liefern, wobei die Nullspannung potenzialfrei ist.

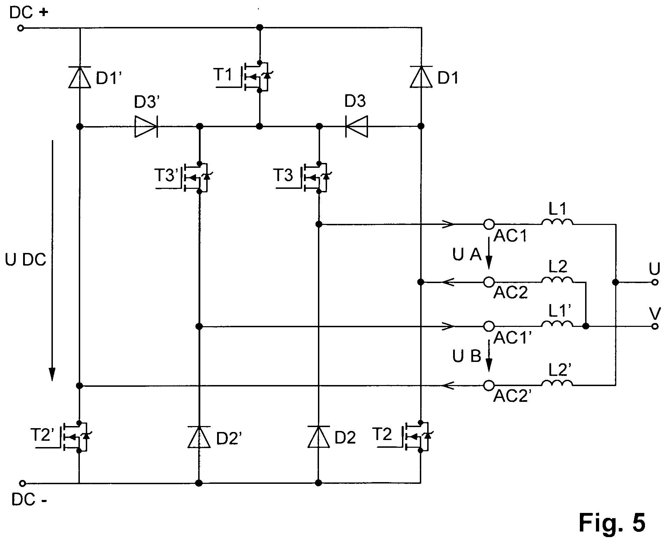

Die Brückenschaltung B ist vergleichbar mit der Brückenschaltung A aufgebaut, nutzt jedoch gemeinsam ein erstes Schaltelement T1, wie näher in Fig. 5 gezeigt ist. Die Brückenschaltung B hat aber die gleichen Eigenschaften bezüglich der Spannung U B. Wechselspannungsseitig sind die beiden Brückenschaltungen A, B derart über Drosseln an den Wechselspannungsausgang U, V der Gesamtschaltung angeschlossen, dass jede der beiden Brückenschaltungen A, B einen Strom in eine der beiden erforderlichen Stromrichtungen treiben kann. Werden die beiden Brückenschaltungen A, B gleichzeitig geschaltet, so kann die Ausgangsspannung U AC unabhängig von der aktuellen Stromrichtung eingestellt werden.

Der bidirektionale Wechselrichter umfasst, wie Fig. 1 zeigt, mehrere Brückeninduktivitäten L1, L2, L1', L2'. Die erste Brückenschaltung A ist mit den beiden Gleichspannungsanschlüssen DC+, DC- und zwei Wechselspannungsanschlüssen AC1, AC2 verbunden. Die zweite Brückenschaltung B ist mit den beiden Gleichspannungsanschlüssen DC+, DC-und zwei anderen Wechselspannungsanschlüssen AC1', AC2' verbunden. Die Wechselspannungsanschlüsse AC1, AC2, AC1', AC2' beider Brückenschaltungen A, B sind über mehrere Brückeninduktivitäten L1, L2, L1', L2', LU', LV' so miteinander verbunden, dass sie nur einen Stromfluss in eine Stromrichtung zulassen und wenigstens einen entkoppelbaren Freilaufpfad schaffen.

Fig. 1 zeigt eine Schaltung, bei der die erste Vollbrückenschaltung A eine schaltbare Verbindung zwischen ihren Anschlüssen AC1, AC2 aufweist, in der ein Strom vom zweiten Anschluss AC2 zum ersten Anschluss AC1 fließt sowie einen Stromfluss vom ersten Anschluss AC1 zum zweiten Anschluss AC2 blockiert und die das Potenzial der Gleichspannungsseite entkoppelt. Die zweite Vollbrückenschaltung B weist ebenfalls eine schaltbare Verbindung zwischen ihren Anschlüssen AC1' und AC2' auf, in der ein Strom vom zweiten Anschluss AC2' zum ersten Anschluss AC1' fließt sowie einen Stromfluss vom ersten Anschluss AC1' zum zweiten Anschluss AC2' blockiert und die das Potenzial der Gleichspannungsseite entkoppelt.

Hierbei ist der erste Wechselspannungsanschluss AC1 der ersten Brückenschaltung A über eine erste Brückeninduktivität L1 mit einem ersten Verbindungspunkt VP1 verbunden. Der andere Wechselspannunganschluss AC2 der ersten Brückenschaltung A ist über eine zweite Brückeninduktivität L2 mit einem zweiten Verbindungspunkt VP2 verbunden. Der erste Wechselspannungsanschluss AC1' der zweiten Brückenschaltung B ist über eine andere, erste Brückeninduktivität L1' mit dem zweiten Verbindungspunkt VP2 verbunden. Der zweite Wechselspannungsanschluss AC2' der zweiten Brückenschaltung B ist über eine andere, zweite Brückeninduktivität L2' mit dem ersten Verbindungspunkt VP1 verbunden. Beide Verknüpfungspunkte VP1, VP2 bilden netzseitige Anschlüsse, d. h., sie sind direkt oder über weitere Filterelemente mit den Wechselspannungsausgängen U bzw. V verbunden. In einer bevorzugten Ausführung der Erfindung sind zwischen den Verbindungspunkten VP1 bzw. VP2 und den Wechselspannungsausgängen U bzw. V Filterdrosseln LU, LV eingefügt. Diese werden vorteilhaft so ausgeführt, dass ihr Induktivitätswert mindestens 5-mal, bevorzugt mindestens 10-30 mal so groß ist wie der Induktivitätswert der Brückendrosseln L1, L2, L1', L2'. Im Allgemeinen genügt der kleine Induktivitätswert der Brückendrosseln L1, L2, L1', L2' bereits, um die Trennung der Stromrichtung aufrecht zu erhalten, während die Filterdrosseln LU, LV die eigentliche Filterfunktion übernehmen, so dass nur diese nennenswerte magnetische Energie speichern müssen. Damit werden nur zwei große magnetische Bauteile benötigt, während die Brückendrosseln L1, L2, L1', L2' klein und leicht ausgeführt werden können.

Fig. 2 zeigt eine Schaltung, bei der statt der beiden Filterdrosseln LU, LV jeweils Doppeldrosseln LU', LV' verwendet werden, wobei die Hauptinduktivitäten der Doppeldrosseln LU' bzw. LV' den Filterinduktivitäten LU, LV entsprechen und die Streuinduktivitäten der Doppeldrosseln den Brückeninduktivitäten L1, L2, L1', L2'. So lässt sich eine Trennung der Stromrichtungen mit nur zwei Bauelementen erreichen. Jede Brückeninduktivität L1, L2, L1', L2' ist als Streuinduktivität einer Filterdrossel LU', LV' ausgeführt. Die Doppeldrossel LU', LV' umfasst zwei Wicklungen auf einem gemeinsamen Kern, wobei jeweils ein Wicklungsende direkt oder über weitere Filterelemente an einem der Wechselspannungsausgänge U, V des Wechselrichters angeschlossen ist, während das andere Wicklungsende mit einem der Wechselspannungsanschlüsse AC1, AC1', AC2, AC2' der beiden Brückenschaltungen A, B verbunden ist.

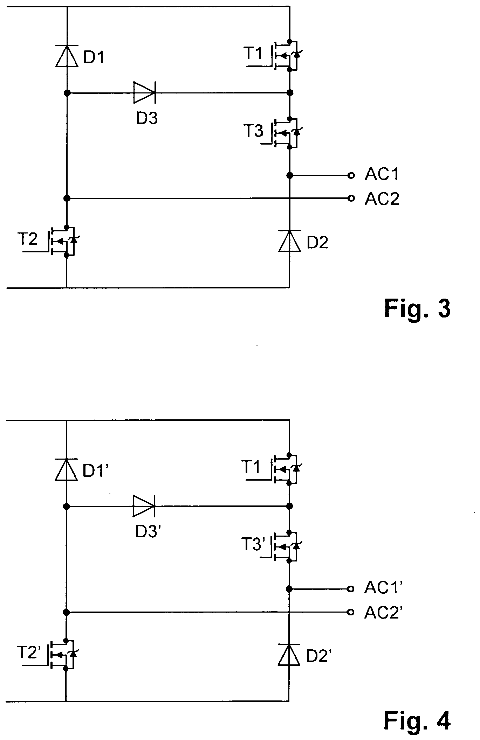

Eine Vollbrückenschaltung besteht immer aus mindestens vier Halbleitern. Fig. 3 zeigt eine vereinfachte Schaltung der Brückenschaltung A mit den vier Halbleitern, und zwar zwei Schalter T1, T2 und zwei Dioden D1 und D2. Fig. 4 zeigt die vereinfachte Schaltung der Brückenschaltung B mit ebenfalls vier Halbleitern, und zwar zwei Schalter T1, T2' und zwei Dioden D1' und D2'. Der Schalter T1 kommt in beiden Schaltungen vor und wird von beiden Schaltungen gemeinsam genutzt.

Diese in den Figuren 3 und 4 gezeigte Schaltungsanordnung ist in Fig. 5 wieder dargestellt. Die erste Brückenschaltung A hat zwei diagonal angeordnete Schalter T1, T2 und zwei diagonal angeordnete Dioden D1, D2. Die zweite Brückenschaltung B hat zwei diagonal angeordnete Schalter T1, T2' und zwei diagonal angeordnete Dioden D1 D2', wobei der Schalter T1 zur Bildung sowohl der ersten Brückenschaltung A als auch zur Bildung der zweiten Brückenschaltung B genutzt wird.

Jede Brückenschaltung umfasst einen Freilaufpfad, der aus einem dritten Schalter T3, T3' und einer dritten Diode D3, D3' besteht.

In dem linken Schaltungsteil liegt der dritte Schalter T3 in Reihe mit dem oberen Schalter T1 und der unteren Diode D2. Eine Diode D3 liegt zwischen dem Verknüpfungspunkt der Schalter T1, T3 einerseits und dem Verknüpfungspunkt der Diode D1 und einer vierten Diode D4 andererseits. Der Anschluss AC1' liegt zwischen dem Schalter T3 und der Diode D2. Der Anschluss AC2' liegt zwischen der vierten Diode D4 und dem unteren Schalter T2.

In dem rechten Schaltungsteil liegt ein weiterer dritter Schalter T3' in Reihe mit dem oberen Schalter T1 und der anderen unteren Diode D2'. Eine weitere Diode D3' liegt zwischen dem Verknüpfungspunkt der Schalter T1, T3' einerseits und dem Verknüpfungspunkt der Diode D1' und dem unteren Schalter T2' andererseits. Der Anschluss AC1 liegt zwischen dem Schalter T3' und der Diode D2'. Der Anschluss AC2 liegt zwischen der Diode D1' und dem anderen unteren Schalter T2'.

Durch das Schalten der beispielsweise als MOSFET ausgeführten Leistungshalbleiter können die Ausgangsspannungen U A = U DC, U A =-U DC und U A=0 eingestellt werden. Die Schaltung gemäß Fig. 5 besitzt zwei potenzialfreie, schaltbare Freiläufe für jeweils eine Stromrichtung, die jeweils aus T3 und D3 bzw. T3' und D3' bestehen. Sind die Halbleiterschalter T1, T2 und T3 geschlossen bzw. T1, T2' und T3' geschlossen, so entsprechen die Ausgangsspannungen U A bzw. U B der Eingangsspannung U DC. Ist nur der Schalter T3 bzw. T3' geschlossen, ergibt sich ein potenzialfreier Freilauf, da der Strom dann durch den Schalter T3 und die Diode D3 bzw. durch den Schalter T3' und die Diode D3' fließt, während die Spannung an den stromlosen Schaltern T1, T2, (bzw. T1, T2') und den stromlosen Dioden D1 und D2 (bzw. D1', D2') nicht definiert ist. Sind alle Halbleiterschalter geöffnet, kann ein Strom in der definierten Richtung nur durch die Dioden D1 und D2 (bzw. D1' und D2') fließen, wodurch sich eine Ausgangsspannung U A bzw. U B = -U DC einstellt. Jede Vollbrückenschaltung A, B kann nur Strom aus dem Anschluss AC1 heraus und in den Anschluss AC2 hinein aktiv treiben, und auch der potenzialfreie Freilauf lässt nur diese Stromrichtung zu. Damit ist es nicht möglich, dass ein Strom durch interne, parasitäre Dioden der Halbleiterschalter T1, T2 bzw. T1, T2' fließt, so dass deren nachteilige Eigenschaften gänzlich eliminiert werden.

Jede der beiden Vollbrückenschaltungen A, B treibt wechselspannungsseitig einen Strom von wenigsten mehreren mA nur in eine solche Richtung, dass dieser aus den ersten Wechselspannungsanschlüssen AC1, AC1' hinaus fließt und durch die zweite Wechselspannungsanschlüsse AC2, AC2' wieder hinein fließt.

Die Vollbrückenschaltung B ist nahezu äquivalent zur Vollbrückenschaltung A aufgebaut. Lediglich ihre Wechselspannungsanschlüsse, zwischen denen die Spannung U B gemessen wird, sind mit AC1' statt AC1 und AC2' statt AC2 bezeichnet.

### Bezugszeichenliste

- A, B: Vollbrücken für jeweils eine wechselspannungsseitige Stromrichtung
- AC1, AC2, AC1', AC2': Wechselspannungsanschlüsse der Vollbrücken A, B
- D1-D3, D1'-D3': Dioden
- DC+, DC: Gleichspannungsanschlüsse
- L1, L2, L1', L2': Brückeninduktivitäten (Brückendrosseln)
- LU, LV: Filterdrosseln
- T1-T3, T2', T3': Halbleiterschalter
- U, V: Wechselspannungsanschlüsse des Wechselrichters
- U A, U B: Ausgangsspannungen der Vollbrücken A, B
- U AC: Spannung auf der Wechselspannungsseite des Wechselrichters
- U DC: Spannung auf der Gleichspannungsseite des Wechselrichters
- VP1, VP2: Verbindungspunkte

## Patentansprüche

1. Bidirektionaler Wechselrichter mit zwei Gleichspannungsanschlüssen (DC+, DC-) und einem ersten Wechselspannungsausgang (U) und einem zweiten Wechselspannungsausgang (V), umfassend zwei Vollbrückenschaltungen (A, B) und mehrere Brückeninduktivitäten (L1, L2, L1', L2'), wobei die erste Brückenschaltung (A) mit den beiden Gleichspannungsanschlüssen (DC+, DC-) und einem ersten Wechselspannungsanschluss (AC1) und einem zweiten Wechselspannungsanschluss (AC2) verbunden ist und die zweite Brückenschaltung (B) mit den beiden Gleichspannungsanschlüssen (DC+, DC-) und einem weiteren ersten Wechselspannungsanschluss (AC1') und einem weiteren zweiten Wechselspannungsanschluss (AC2') verbunden ist, sowie die Wechselspannungsanschlüsse (AC1, AC2, AC1', AC2') beider Brückenschaltungen (A, B) über die Brückeninduktivitäten (L1, L2, L1', L2', LU', LV') miteinander verbunden sind, und wenigstens einen von der Gleichspannungsquelle entkoppelbaren, potenzialfreien und schaltbaren Freilaufpfad schaffen,
**dadurch gekennzeichnet, dass**
jede der Vollbrückenschaltungen (A, B) wechselspannungsseitig einen Strom, der über den Leckstrom der Halbleiter hinausgeht, nur in eine solche Richtung treibt, dass dieser aus dem ersten und dem weiteren ersten Wechselspannungsanschluss (AC1, AC1') hinaus fließt und durch den zweiten und den weiteren zweiten Wechselspannungsanschluss (AC2, AC2') wieder hinein fließt, wobei die erste Brückenschaltung (A) zwei diagonal angeordnete Schalter (T1, T2) und zwei diagonal angeordnete Dioden (D1, D2) umfasst und die zweite Brückenschaltung (B) zwei diagonal angeordnete Schalter (T1, T2') und zwei diagonal angeordnete Dioden (D1', D2') umfasst und wobei einer der Schalter (T1) zur Bildung sowohl der ersten Brückenschaltung (A) als auch zur Bildung der zweiten Brückenschaltung (B) genutzt wird.

2. Wechselrichter nach Anspruch 1, **dadurch gekennzeichnet, dass** jede Brückenschaltung einen Freilaufpfad umfasst, der aus einem dritten Schalter (T3, T3') und einer dritten Diode (D3, D3') besteht.

3. Wechselrichter nach Anspruch 2, **dadurch gekennzeichnet, dass** der dritte Schalter (T3, T3') in Reihe zwischen dem ersten Schalter (T1) und der zweiten Diode (D2; D2') geschaltet ist und die dritte Diode (D3; D3') in Reihe zwischen der ersten Diode (D1; D1') und dem dritten Schalter (T3, T3') geschaltet ist.

4. Wechselrichter nach einem der vorhergehenden Ansprüche,
**dadurch gekennzeichnet,**
**dass** durch die schaltbare Verbindung zwischen den Wechselspannungsanschlüssen (AC1, AC2) der ersten Vollbrückenschaltung (A) ein Strom vom zweiten Wechselspannungsanschluss (AC2) zum ersten Wechselspannungsanschluss (AC1) fließt sowie ein Stromfluss vom ersten Wechselspannungsanschluss (AC1) zum zweiten Wechselspannungsanschluss (AC2) blockiert wird, und
**dass** durch die schaltbare Verbindung zwischen den Wechselspannungsanschlüssen (AC1', AC2') der zweiten Vollbrückenschaltung (B) ein Strom vom weiteren zweiten Anschluss (AC2') zum weiteren ersten Anschluss (AC1') fließt sowie ein Stromfluss vom weiteren ersten Wechselspannungsanschluss (AC1') zum weiteren zweiten Wechselspannungsanschluss (AC2') blockiert wird.

5. Wechselrichter nach einem der vorhergehenden Ansprüche,
**dadurch gekennzeichnet,**
**dass** ein erster Verbindungspunkt (VP1) mit dem ersten Wechselspannungsausgang (U) des Wechselrichters direkt oder über Filterelemente verbunden ist und
**dass** ein zweiter Verbindungspunkt (VP2) mit dem zweiten Wechselspannungsausgang (V) des Wechselrichters direkt oder über Filterelemente verbunden ist.

6. Wechselrichter nach einem der vorhergehenden Ansprüche,
**dadurch gekennzeichnet,**
**dass** wenigstens vier Brückeninduktivitäten (L1, L2, L1', L2') zur Verbindung der Vollbrückenschaltungen (A, B) untereinander vorhanden sind.

7. Wechselrichter nach Anspruch 6,
**dadurch gekennzeichnet,**
**dass** der erste Wechselspannungsanschluss (AC1) der ersten Brükkenschaltung (A) über eine erste Brückeninduktivität (L1) mit einem ersten Verbindungspunkt (VP1) verbunden ist,
**dass** der zweite Wechselspannungsanschluss (AC2) der ersten Brückenschaltung (A) über eine zweite Brückeninduktivität (L2) mit einem zweiten Verbindungspunkt (VP2) verbunden ist,
**dass** der weitere erste Wechselspannungsanschluss (AC1') der zweiten Brükkenschaltung (B) über eine andere, erste Brückeninduktivität (L1') mit dem zweiten Verbindungspunkt (VP2) verbunden ist,
**dass** der weitere zweite Wechselspannungsanschluss (AC2') der zweiten Brückenschaltung (B) über eine andere, zweite Brückeninduktivität (L2') mit dem ersten Verbindungspunkt (VP1) verbunden ist,
**dass** beide Verknüpfungspunkte (VP1, VP2) netzseitige Ausgänge (U, V) bilden.

8. Wechselrichter nach Anspruch 6 oder 7,
**dadurch gekennzeichnet,**
**dass** zwischen dem ersten Verbindungspunkt (VP1) und dem ersten Wechselspannungsausgang (U) sowie zwischen dem zweiten Verbindungspunkt (VP2) und dem zweiten Wechselspannungsausgang (V) jeweils mindestens eine Filterinduktivität (LU, LV) angeschlossen ist, die jeweils einen mindestens fünfmal größeren Induktivitätswert als jede einzelne Brückeninduktivität (L1, L2, L1', L2') aufweist.

9. Wechselrichter nach einem der vorhergehenden Ansprüche,
**dadurch gekennzeichnet,**
**dass** vier Drossel-Bauelemente vorhanden sind, die jeweils eine Brükkeninduktivität (L1, L2, L1', L2') zwischen den Brückenschaltungen (A, B) und den Verknüpfungspunkten (VP1, VP2) bilden.

10. Wechselrichter nach einem der vorhergehenden Ansprüche,
**dadurch gekennzeichnet,**
**dass** jede Brückeninduktivität (L1, L2, L1', L2') als Streuinduktivität einer Filterdrossel (LU, LV) ausgeführt ist, wobei die Filterdrossel (LU, LV) zwei Wicklungen auf einem gemeinsamen Kern besitzt, wobei jeweils ein Wicklungsende beider Wicklungen direkt oder über weitere Filterelemente an einem der Wechselspannungsausgänge (U, V) des Wechselrichters angeschlossen ist, während das jeweils andere Wicklungsende mit einem der Wechselspannungsanschlüsse (AC1, AC1', AC2, AC2') der beiden Brückenschaltungen (A, B) verbunden ist.

11. Wechselrichter nach einem der vorhergehenden Ansprüche,
**dadurch gekennzeichnet,**
**dass** Filterinduktivitäten (LU, LV) vorhanden sind, die mindestens den 5-fachen, insbesondere mindestens den 10-30-fachen Induktivitätswert jeder einzelnen Brückeninduktivität (L1, L2, L1', L2') aufweisen.

12. Wechselrichter nach einem der vorhergehenden Ansprüche,
**dadurch gekennzeichnet,**
**dass** das Verhältnis von Filterinduktivitäten (LU, LV) zu den Brückeninduktivitäten (L1, L2, L1', L2') derart gewählt ist, dass kein Strom durch Bodydioden von Schaltelementen (T1 - T3, T2', T3') der Brückenschaltungen fließt.

13. Wechselrichter nach einem der vorhergehenden Ansprüche,
**gekennzeichnet durch**
eine Ausführung als Photovoltaikwechselrichter.

## Claims

1. A bidirectional inverter with two DC terminals (DC +, DC) and a first AC output (U) and a second AC output (V) comprising two full bridge circuits (A, B) and a plurality of bridge inductors (L1, L2, L1', L2'), wherein the first bridge circuit (A) is connected to the two DC terminals (DC+, DC-) and a first AC terminal (AC1) and a second d AC terminal (AC2), and the second bridge circuit (B) is connected to the two DC voltage terminals (DC+, DC-) and to a further first AC terminal (AC1') and a further second AC terminal (AC2'), and wherein the AC terminals (AC1, AC2, AC1', AC2') of both bridge circuits (A, B) are connected via the bridge inductors (L1, L2, L1 ' L2', LU', LV') and form at least one decouplable, potential-free and switchable freewheeling path,
**characterized in that** each of the full bridge circuits (A, B) drives a current on the AC side larger than the leakage current of the semiconductors only in such a direction that this current flows out of the first and the further first AC terminals (AC1, AC1') and in through the second and the further second AC terminal (AC2, AC2'), wherein the first bridge circuit (A) comprises two diagonally arranged switches (T1, T2) and two diagonally arranged diodes (D1, D2), and the second bridge circuit (B) comprises two diagonally arranged switches (T1', T2') and two diagonally arranged diodes (D1', D2'), and wherein one of the switches (T1) is used to form the first bridge circuit (A) as well as the second bridge circuit (B).

2. The inverter according to claim 1, **characterized in that** each bridging circuit comprises a freewheeling path consisting of a third switch (T3, T3 ') and a third diode (D3, D3').

3. The inverter according to claim 2, **characterized in that** the third switch (T3, T3') is connected in series between the first switch (T1) and the second diode (D2, D2'), and the third diode (D3, D3') is connected in series between the first diode (D1, D1') and the third switch (T3, T3').

4. The inverter according to one of the preceding claims,
**characterized in that** a current flows from the second AC terminal (AC2) to the first AC terminal (AC1) via the switchable connection between the AC terminals (AC1, AC2) of the first full bridge circuit (A), while a current flow from the first AC terminal (AC1) to the second AC terminal (AC2) is blocked, and a current flows from the further second AC terminal (AC2') to the further first AC terminal (AC1') via the switchable connection between the AC terminals (AC1, AC2) of the second full bridge circuit (B), while a current flow from the further first AC terminal (AC1') to the further second AC terminal (AC2') is blocked.

5. The inverter according to one of the preceding claims,
**characterized in that** a first connection (VP1) is connected to the first AC output (U) of the inverter directly or via filter elements, and **in that** a second connection point (VP2) is connected to the second AC output (V) of the inverter directly or via filter elements.

6. The inverter according to one of the preceding claims,
**characterized in that** at least four bridge inductors (L1, L2, L1', L2') are provided for connecting the full-bridge circuits (A, B) to one another.

7. The inverter according to claim 6
**characterized in that** the first AC terminal (AC1) of the first bridge circuit (A) is connected to the first connection point (VP1) via a first bridge inductor (L1),
**in that** the second AC terminal (AC2) of the first bridge circuit (A) is connected to a second connection point (VP2) via a second bridge inductor (L2),
**in that** the further first AC terminal (AC1') of the second bridge circuit (B) is connected to the second connection point (VP2) via another first bridge inductor (L1') in that the further second AC terminal (AC2') of the second bridge circuit (B) is connected to the first connection point (VP1) via another second bridge inductor (L2'),and
**in that** both connection points (VP2) form grid side outputs (U, V).

8. The inverter according to claim 6 or 7,
**characterized in that** between the first connection point (VP1) and the first AC output (U), and between the second connection point (VP2) and the second AC output (V), at least one filter inductor (LU, LV) is connected each with a inductance value at least five times larger than each individual bridge inductor (L1, L2, L1', L2').

9. The inverter according to one of the preceding claims,
**characterized in that** four inductor elements are present, each forming a bridge inductor (L1, L2, L1', L2') between the bridge circuits (A, B) and the connection points (VP1, VP2).

10. The inverter according to one of the preceding claims,
**characterized in that** each bridge inductor is provided as stray inductance of a filter inductor (LU, LV), wherein the filter inductor (LU, LV) comprises two windings on a common core, wherein one winding end of both windings is connected to one of the AC outputs (U, V) of the inverter directly or via filter elements, while the other winding end is connected to one of the AC terminals (AC1, AC1', AC2, AC2') of both bridge circuits (A, B).

11. The inverter according to one of the preceding claims,
**characterized in that** filter inductors (LU, LV) are present which have an inductance value at least 5 times, in particular at least 10-30 times the inductance value of each individual bridge inductor (L1, L2, L1', L2'), respectively.

12. The inverter according to one of the preceding claims,
**characterized in that** the inductance ratio of filter inductors (LU, LV) to the bridge inductors (L1, L2, L1', L2') is selected in such a way that no current flows through the body diodes of switching elements (T1-T3, T2', T3') of the bridge circuits.

13. The inverter according to one of the preceding claims,
**characterized by** an embodiment as a photovoltaic inverter.

## Revendications

1. Onduleur bidirectionnel avec deux bornes de tension continue (DC+, DC-), ainsi qu'avec une première sortie de tension alternative (U) et une deuxième sortie de tension alternative (V), comprenant deux circuits en pont intégral (A, B) et plusieurs inductances en pont (L1, L2, L1', L2'), selon lequel le premier circuit en pont (A) est raccordé aux deux bornes de tension continue (DC+, DC-), ainsi qu'à une première borne de tension alternative (AC1) et à une deuxième borne de tension alternative (AC2), d'une part, et le deuxième circuit en pont (B) est raccordé aux deux bornes de tension continue (DC+, DC-), ainsi qu'à une autre première borne de tension alternative (AC1') et à une autre deuxième borne de tension alternative (AC2'), d'autre part, ainsi que les bornes de tension alternative (AC1, AC2, AC1', AC2') des deux circuits en pont (A, B) sont raccordées les unes aux autres par l'intermédiaire des inductances en pont (L1, L2, L1', L2', LU', LV') et créent au moins un chemin de roue libre commutable, sans potentiel et pouvant être découplé de la source de tension continue,
**caractérisé en ce que**
chacun des circuits en pont intégral (A, B) fait circuler dans une seule direction un courant se trouvant du côté de la tension alternative, lequel courant dépasse le cadre du courant de fuite du semiconducteur, de telle sorte que celui-ci circule à partir de la première et de l'autre première borne de tension alternative (AC1, AC1') et revient de nouveau par l'intermédiaire de la deuxième et de l'autre deuxième borne de tension alternative (AC2, AC2'), selon lequel le premier circuit en pont (A) comprend deux commutateurs (T1, T2) disposés en diagonale et deux diodes (D1, D2) disposées en diagonale et le deuxième circuit en pont (B) comprend deux commutateurs (T1, T2') disposés en diagonale et deux diodes (D1', D2') disposées en diagonale et selon lequel l'un des commutateurs (T1) est utilisé aussi bien en vue de la formation du premier circuit en pont (A) qu'en vue de la formation du deuxième circuit en pont (B).

2. Onduleur selon la revendication 1,
**caractérisé en ce que**
chaque circuit en pont comprend un chemin de roue libre, lequel est constitué d'un troisième commutateur (T3, T3') et d'une troisième diode (D3, D3').

3. Onduleur selon la revendication 2,
**caractérisé en ce que**
le troisième commutateur (T3, T3') est monté en série entre le premier commutateur (T1) et la deuxième diode (D2 ; D2') et la troisième diode (D3 ; D3') est montée en série entre la première diode (D1 ; D1') et le troisième commutateur (T3, T3').

4. Onduleur selon l'une des revendications précédentes,
**caractérisé en ce que**
la liaison commutable située entre les bornes de tension alternative (AC1, AC2) du premier circuit en pont intégral (A) permet à un courant de circuler depuis la deuxième borne de tension alternative (AC2) jusqu'à la première borne de tension alternative (AC1) et permet également de bloquer un flux de courant depuis la première borne de tension alternative (AC1) jusqu'à la deuxième borne de tension alternative (AC2) ; et
**caractérisé en ce que**
la liaison commutable située entre les bornes de tension alternative (AC1', AC2') du deuxième circuit en pont intégral (B) permet à un courant de circuler depuis l'autre deuxième borne de tension alternative (AC2') jusqu'à l'autre première borne de tension alternative (AC1') et permet également de bloquer un flux de courant depuis l'autre première borne de tension alternative (AC1') jusqu'à l'autre deuxième borne de tension alternative (AC2').

5. Onduleur selon l'une des revendications précédentes,
**caractérisé en ce que**
un premier point de liaison (VP1) est raccordé à la première sortie de tension alternative (U) de l'onduleur, directement ou par l'intermédiaire d'éléments filtrants ; et
**caractérisé en ce que**
un deuxième point de liaison (VP2) est raccordé à la deuxième sortie de tension alternative (V) de l'onduleur, directement ou par l'intermédiaire d'éléments filtrants.

6. Onduleur selon l'une des revendications précédentes,
**caractérisé en ce que**
au moins quatre inductances en pont (L1, L2, L1' L2') sont présentes, lesquelles sont destinées à la liaison des circuits en pont intégral (A, B) les uns avec les autres.

7. Onduleur selon la revendication 6,
**caractérisé en ce que**
la première borne de tension alternative (AC1) du premier circuit en pont (A) est raccordée à un premier point de liaison (VP1) par l'intermédiaire d'une première inductance en pont (L1) ;
**caractérisé en ce que**
la deuxième borne de tension alternative (AC2) du premier circuit en pont (A) est raccordée à un deuxième point de liaison (VP2) par l'intermédiaire d'une deuxième inductance en pont (L2) ;
**caractérisé en ce que**
l'autre première borne de tension alternative (AC1') du deuxième circuit en pont (B) est raccordée au deuxième point de liaison (VP2) par l'intermédiaire d'une autre première inductance en pont (L1') ;
**caractérisé en ce que**
l'autre deuxième borne de tension alternative (AC2') du deuxième circuit en pont (B) est raccordée au premier point de liaison (VP1) par l'intermédiaire d'une autre deuxième inductance en pont (L2') ;
**caractérisé en ce que**
les deux points d'interconnexion (VP1, VP2) forment des sorties (U, V) situées du côté du réseau.

8. Onduleur selon la revendication 6 ou 7,
**caractérisé en ce que**
au moins une inductance de filtre (LU, LV) est raccordée respectivement entre le premier point de liaison (VP1) et la première sortie de tension alternative (U), ainsi qu'entre le deuxième point de liaison (VP2) et la deuxième sortie de tension alternative (V), laquelle inductance de filtre présente respectivement une valeur d'inductance au moins cinq fois supérieure à chacune des inductances en pont (L1, L2, L1', L2') individuelles.

9. Onduleur selon l'une des revendications précédentes,
**caractérisé en ce que**
quatre éléments structurels d'étranglement sont présents, lesquels forment respectivement une inductance en pont (L1, L2, L1', L2') entre les circuits en pont (A, B) et les points d'interconnexion (VP1, VP2).

10. Onduleur selon l'une des revendications précédentes,
**caractérisé en ce que**
chaque inductance en pont (L1, L2, L1', L2') est réalisée sous la forme d'une inductance de fuite d'une inductance de filtrage (LU, LV), selon lequel l'inductance de filtrage (LU, LV) possède deux bobinages sur un noyau commun, selon lequel une extrémité de bobinage des deux bobinages est raccordée respectivement à l'une des sorties de tension alternative (U, V) de l'onduleur, directement ou par l'intermédiaire d'autres éléments filtrants, tandis que l'autre extrémité de bobinage respective est raccordée à l'une des bornes de tension alternative (AC1, AC1', AC2, AC2') des deux circuits en pont (A, B).

11. Onduleur selon l'une des revendications précédentes,
**caractérisé en ce que**
des inductances de filtre (LU, LV) sont présentes, lesquelles présentent une valeur d'inductance au moins cinq fois, en particulier entre au moins 10 et 30 fois, de chacune des inductances en pont (L1, L2, L1', L2') individuelles.

12. Onduleur selon l'une des revendications précédentes,
**caractérisé en ce que**
le rapport entre les inductances de filtre (LU, LV) et les inductances en pont (L1, L2, L1', L2') est sélectionné de telle sorte qu'aucun courant ne circule à travers des diodes de type « body diode » des éléments de commutation (T1-T3, T2', T3') des circuits en pont.

13. Onduleur selon l'une des revendications précédentes,
**caractérisé par**
une réalisation sous la forme d'un onduleur photovoltaïque.
